# EUROPÄISCHE PATENTSCHRIFT

(11) **EP 0 463 351 B1**
(45) Veröffentlichungstag und Bekanntmachung des Hinweises auf die Patenterteilung: **22.11.1995**
(21) Anmeldenummer: 91108022.4
(22) Anmeldetag: 17.05.1991
(51) Int. Cl.: B60J 7/043

(54) **Fahrzeugdach mit Solarstromquelle und Kontakteinrichtung**
Vehicle roof with solar current source and contact device
Toit de voiture avec une source d'énergie solaire et un dispositif de contact

(30) Priorität: 29.06.1990 DE 4020655
(43) Veröffentlichungstag der Anmeldung: 02.01.1992
(73) Patentinhaber: Webasto AG Fahrzeugtechnik, D-82131 Stockdorf (DE)
(72) Erfinder: Paetz, Werner, W-8050 Freising (DE); Meiler, Klaus, W-8134 Pöcking (DE); Schumacher, Thomas, W-8882 Lauingen (DE); Bienert, Horst, W-8035 Gauting (DE); Hirschberger, August, W-8000 München 60 (DE); Pfisterer, Hermann, W-8035 Gauting (DE); Höller, Manfred, W-8000 München 21 (DE)

(56) Entgegenhaltungen:
- EP-A- 0 256 313
- DE-A- 3 545 014
- DE-A- 3 830 483
- GB-A- 2 166 191
- US-A- 4 934 753

## Beschreibung

Die Erfindung bezieht sich auf ein Fahrzeugdach mit mindestens einem eine Solarstromquelle tragenden Deckel zum wahlweisen Verschließen oder mindestens teilweisen Freilegen einer Dachöffnung, mit mindestens einem aus der Solarstromquelle gespeisten Verbraucher, der von dem Deckel getrennt, vorzugsweise fahrzeugfest, angeordnet ist, und mit einer Kontakteinrichtung zum Herstellen einer elektrischen Verbindung zwischen der Solarstromquelle und dem Verbraucher, wobei der Deckel in der vorderen Deckelendstellung durch Verschwenken wahlweise in eine Schließstellung, in eine Stellung mit über die feste Dachhaut ausgestellter Hinterkante und/oder in eine Stellung mit unter die feste Dachhaut abgesenkter Hinterkante bringbar ist.

Bei einem bekannten Fahrzeugdach dieser Art (DE 38 30 484 A1) weist die Kontakteinrichtung mindestens eine sich in der Verschieberichtung des Deckels erstreckende Stromschiene und mindestens einen Gleitkontakt auf, der mit der Stromschiene unabhängig von der jeweiligen Deckelschiebestellung in elektrischem Kontakt gehalten ist.

Weiterhin sind Belüftungseinrichtungen für Fahrzeug-Hebedächer mit ausstellbarem Deckel bekannt (DE 88 08 782 U1 und DE 88 15 676 U1), bei denen ein Lüfter mit einem aus einer Solarstromquelle gespeisten Antriebsmotor auf der Fahrzeuginnenseite des Deckels entweder an einer dachfesten Strebe oder an dem Deckel befestigt ist. Zum wahlweisen Ein- und Ausschalten des Lüfterantriebsmotors ist ein Handschalter vorgesehen, der in einem von der Solarstromquelle zu dem Antriebsmotor führenden Stromkreis liegt.

Ferner ist eine Einrichtung zum Belüften von Räumen in Fahrzeugen bekannt (EP-A-0 256 313, Fig. 1 und 2), bei der ein verstellbarer Deckel sowohl eine Solarstromquelle als auch einen Verbraucher in Form eines Querstromgebläses trägt. An dem Lüftergehäuse kann ein Schalter zum Unterbrechen der elektrischen Verbindung zwischen der Solarstromquelle und dem Gebläse vorgesehen sein. Bei geschlossenem Dach wird bei Sonneneinstrahlung und geschlossenem Schalter das Gebläse durch die elektrische Leistung der Solarstromquelle angetrieben. Bei einer anderen bekannten Belüftungseinrichtung für Fahrzeuge (EP-A-0 256 313, Fig. 6) ist ein Querstromgebläse in einem Windabweiser untergebracht, der auf die feste Dachfläche im Bereich des vorderen Randes einer Dachöffnung aufgesetzt ist. Letztere kann mittels eines Stahlschiebedeckels verschlossen oder freigelegt werden. Die Außenhaut des dachfesten Windabweisers ist von einem Solarmodul überdeckt, welches den Antriebsmotor des Gebläses speist. Am Grundkörper des Windabweisers sind Schalter vorgesehen, die durch den Schiebedeckel betätigt werden und die Stromzufuhr zu dem Gebläse überwachen, so daß das Gebläse nur in einer Parkstellung des Schiebedeckels arbeitet, in welcher ein Spalt zwischen dem Schiebedeckel und dem vorderen Rand der Dachöffnung verbleibt.

Bei einem Fahrzeug ist eine Nutzung der Solarstromquelle insbesondere dann von Interesse, wenn das Fahrzeug abgestellt ist, da dann die Bordbatterie nicht von der Lichtmaschine nachgeladen wird. Die Solarstromquelle erlaubt es, bei abgestelltem Fahrzeugmotor Stromverbraucher, z.B. einen Lüfter, auch langfristig zu betreiben, ohne daß die Gefahr einer übermäßigen Entladung der Bordbatterie besteht. Auf diese Weise läßt sich selbst in einem in der Sonne geparkten Fahrzeug eine annehmbare Innentemperatur aufrechterhalten.

Der Erfindung liegt die Aufgabe zugrunde, ein Fahrzeugdach zu schaffen, bei welchem die Solarstromquelle auf besonders wirkungsvolle und bequeme Weise mit dem Verbraucher in stromführende Verbindung gebracht wird.

Diese Aufgabe wird erfindungsgemäß dadurch gelöst, daß bei einem Fahrzeugdach gemäß dem Oberbegriff des Patentanspruchs 1 die Kontakteinrichtung als Schaltanordnung ausgebildet ist und der Deckel derart Teil dieser Schaltanordnung ist, daß in Abhängigkeit von der Stellung des Deckels die Schaltanordnung in der vorderen Deckelendstellung schließt und dadurch den Verbraucher mit der Solarstromquelle verbindet, daß die Schaltanordnung bei in der vorderen Deckelendstellung befindlichen Deckel unabhängig davon geschlossen bleibt, ob der Deckel die Schließstellung einnimmt oder mit seiner Hinterkante über die feste Dachhaut ausgestellt oder mit seiner Hinterkante unter die feste Dachhaut abgesenkt ist, und daß die Schaltanordnung den Verbraucher in allen anderen Deckelstellungen von der Solarstromquelle abtrennt.

Die erfindungsgemäße Lösung nutzt den Umstand, daß bei einem Fahrzeug, das mit einem Schiebehebedach, Spoilerdach, Lüfterdach oder dergleichen ausgerüstet ist, der Deckel schon aus Sicherheitsgründen in der Regel in die vordere Deckelendstellung gebracht wird, wenn das Fahrzeug geparkt werden soll. Daher kann das Fahrzeugdach nach der Erfindung ohne einen zusätzlichen, von Hand zu betätigenden Schalter im Stromkreis zwischen der Solarstromquelle und dem Verbraucher auskommen. Wenn aber gleichwohl ein solcher zusätzlicher Schalter vorgesehen ist, kann er normalerweise in der Schließstellung verbleiben. Er wird dann nur in Sonderfällen betätigt, insbesondere dann, wenn es aus irgendwelchen Gründen ausnahmsweise unerwünscht ist, daß der Verbraucher an die Solarstromquelle angeschlossen ist, während der Deckel in der oder den vorbestimmten Deckelstellung(en) steht.

Weitere Ausgestaltungen der Erfindung ergeben sich aus den Unteransprüchen.

Zweckmäßig weist die Schaltanordnung mindestens einen mit dem Deckel oder einem deckelfesten Teil verbundenen Schaltkontakt sowie mindestens einen damit in vorbestimmter Deckelstellung in Kontakt kommenden, mit einem dachfesten Teil, mit einem Windabweiser und/oder einem Windabweiser-Ausstellarm verbundenen Schaltkontakt auf, wobei mindestens einer der beiden miteinander zusammenwirkenden Schaltkontakte mit Bezug auf den anderen Kontakt federnd ausgebildet und/oder federnd gelagert ist, um zum einen unvermeidliche Fertigungs- und Montagetoleranzen auszugleichen sowie zum anderen für eine Kontaktanpreßkraft zu sorgen, die einen niederohmigen Stromübergang zwischen den beiden Schaltkontakten sicherstellt.

Wenn die miteinander in Kontakt kommenden Kontaktflächen der beiden zusammenwirkenden Schaltkontakte in einer lotrechen oder nahezu lotrechten Ebene angeordnet sind und die Kontaktfläche des dachfesten Schaltkontaktes auf oder nahe der Deckelschwenkachse liegt, ist ein sicherer gegenseitiger Kontakt der Schaltkontakte auch im Bereich der Verschwenkbewegung des Deckels problemlos zu gewährleisten.

In weiterer Ausgestaltung der Erfindung ist ein Trägerteil des mit einem deckelfesten Teil verbundenen Schaltkontaktes gegenüber dem Deckel in lotrechter Richtung federnd vorgespannt. Dies erlaubt eine Höheneinstellung des Deckels, ohne daß sich dadurch die Höhenlage des die Deckelbewegungen mitmachenden Schaltkontaktes gegenüber der Höhenlage des dachfesten Schaltkontaktes ändert. Wenn dabei das in lotrechter Richtung federnd vorgespannte Trägerteil an einem Deckelhimmel abgestützt ist, der unterhalb des Deckels entlang dachfester Führungen verschiebbar angeordnet ist, wird zugleich ein Klappern des Deckelhimmels vermieden, ohne daß es dazu zusätzlicher Bauteile bedarf.

Ausführungsbeispiele des Fahrzeugdaches nach der Erfindung sind nachstehend anhand der Zeichnungen näher erläutert. Es zeigt:
- Fig. 1: eine Draufsicht auf ein Fahrzeugdach,
- Fig. 2: eine aufgebrochene Teildraufsicht auf das Fahrzeugdach,
- Fig. 3: einen Teilschnitt durch das Fahrzeugdach entlang der Linie III-III der Fign. 1 und 2,
- Fig. 4: einen Teilschnitt durch das Fahrzeugdach entlang der Linie IV-IV der Fign. 1 und 2,
- Fig. 5: in größerem Maßstab eine aufgeschnittene Draufsicht auf den Kontaktstößel der Schaltanordnung des Fahrzeugdaches nach Fign. 1 bis 4,
- Fig. 6: gleichfalls in größerem Maßstab eine Draufsicht auf den Gegenkontakt der Schaltanordnung und dessen Trägerplatte,
- Fig. 7: den Schnitt entlang der Linie VII-VII der Fig. 6,
- Fig. 8: eine Ansicht des Gegenkontaktes und der Trägerplatte gemäß den Fign. 6 und 7, von unten gesehen,
- Fig. 9: einen Teilschnitt entsprechend Fig. 3 durch ein Fahrzeugdach gemäß einer abgewandelten Ausführungsform,
- Fign. 10 und 11: Teilschnitte entsprechend Fig. 9 für unterschiedliche Einbaulagen des Deckels,
- Fig. 12: eine perspektivische Darstellung einer Schaltanordnung gemäß einer weiter abgewandelten Ausführungsform,
- Fig. 13: den Schnitt entlang der Linie XIII-XIII der Fig. 12,
- Fig. 14: einen Teillängsschnitt durch ein Fahrzeugdach entsprechend einer weiter abgewandelten Ausführungsform mit in Schließstellung stehendem Deckel,
- Fig. 15: einen Schnitt entsprechend Fig. 14 bei ausgestelltem Deckel, und
- Fig. 16: eine auseinandergezogene perspektivische Darstellung der Schaltanordnung nach den Fign. 14 und 15 und der zugehörigen Dachteile,
- Fig. 17: eine perspektivische Darstellung einer weiter abgewandelten Ausführungsform,
- Fig. 18: eine auseinandergezogene perspektivische Darstellung ähnlich Fig. 16 für eine weiter abgewandelte Ausführungsform der Schaltanordnung, sowie
- Fign. 19 und 20: Teillängsschnitte entsprechend den Fign. 14 und 15 für die Ausführungsform gemäß Fig. 17.

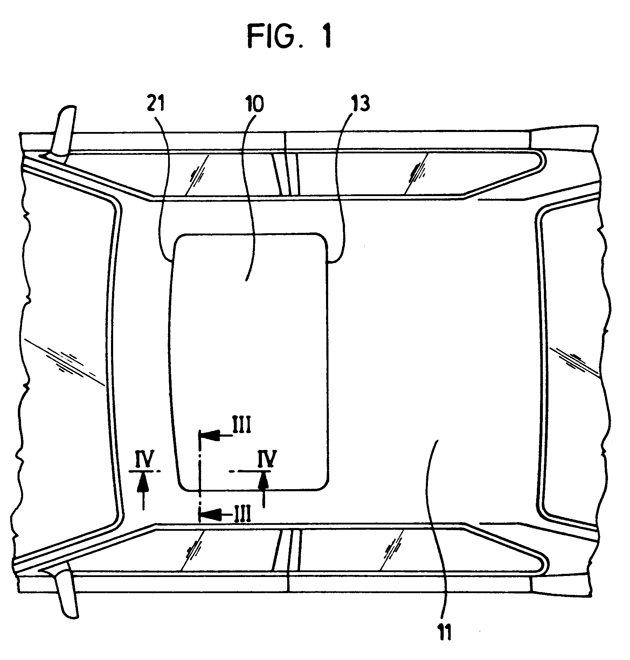

Das in den Fign. 1 bis 4 veranschaulichte Fahrzeugdach weist einen Deckel 10 auf, der es erlaubt, eine in einer festen Dachfläche 11 ausgebildete Dachöffnung 12 wahlweise zu verschließen oder mindestens teilweise freizulegen. Bei dem veranschaulichten Fahrzeugdach handelt es sich um ein Schiebehebedach, dessen Deckel 11 mit seiner Hinterkante 13 über die feste Dachfläche 11 nach oben ausgestellt oder nach Absenken der Deckelhinterkante 13 nach hinten unter die feste Dachfläche 11 geschoben werden kann. Zweckentsprechende Deckelverstellmechanismen sind bekannt (z.B. DE 29 23 904 C3) und brauchen deshalb vorliegend nicht näher erläutert zu werden. Das Fahrzeugdach kann u.a. aber auch in an sich bekannter Weise als Spoilerdach (DE 33 11 498 A1) ausgelegt sein, dessen ausgestellter Deckel sich nach hinten über die feste Dachfläche 11 schieben läßt.

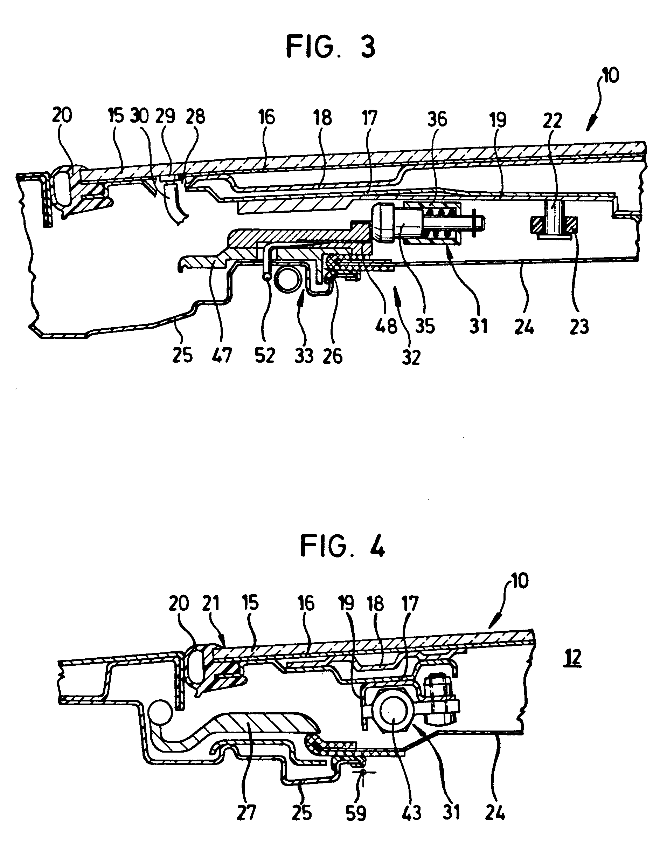

Der Deckel 10 trägt eine Solarstromquelle, die im veranschaulichten Ausführungsbeispiel als Solareinheit 15 ausgebildet ist, welche sich über die gesamte oder nahezu die gesamte Deckeloberfläche erstreckt. Die Solareinheit 15 ist in nicht näher dargestellter Weise mit einer Solarzellenschicht aus kristallinem oder amorphem Halbleiterwerkstoff, insbesondere Silizium, ausgestattet. Die Solareinheit 15 ist entsprechend den Fign. 3 und 4 mit einem Deckelaußenblech 16 verbunden, beispielsweise ganzflächig verliebt. Zu dem Deckel 10 gehören ferner ein Deckelinnenblech 17, eine rahmenförmige Verstärkung 18, ein Aufnahmewinkel 19 und eine sich rings um den Deckel erstreckende Deckeldichtung 20. Der Deckel und die mit dem Deckel zusammenwirkenden Dachteile sind mit Bezug auf eine Längssymmetrieachse im wesentlichen spiegelsymmetrisch ausgebildet. Die nachstehende Beschreibung für die linke Deckelseite gilt sinngemäß auch für die rechte Deckelseite.

An dem Aufnahmewinkel 19 ist nahe der Deckelvorderkante 21 ein Himmeltransportbolzen 22 angebracht, der mit einem Himmeltransporthaken 23 eines Deckelhimmels 24 zusammenwirkt, wie dies beispielsweise aus der DE 35 32 083 C bekannt ist. Dadurch wird der unterhalb des Deckels 10 sitzende Deckelhimmel 24 veranlaßt, Schiebebewegungen des Deckels 10 in Fahrzeuglängsrichtung mitzumachen. Dabei wirken die Seiterränder des Himmels 24 mit von einem Dachrahmen 25 gebildeten seitlichen dachfesten Längsführungen 26 zusammen. Bei 27 (Fig. 4) ist ein sich entlang der Vorderkante der Dachöffnung 12 erstreckender Windabweiser angedeutet, der aus der veranschaulichten Ruhestellung selbsttätig in eine Arbeitsstellung hochschwenkt, wenn der Deckel 10 nach hinten verschoben wird.

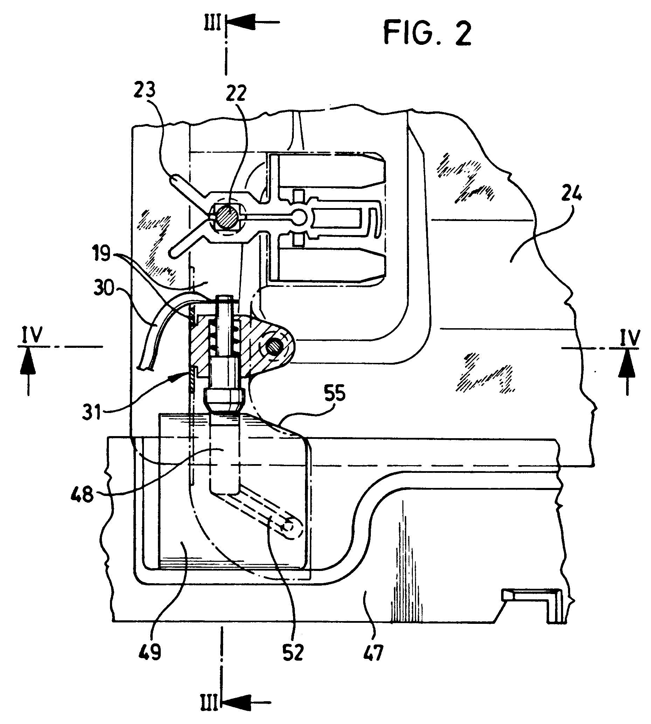

Das Deckelinnenblech 17 ist in den beiden vorderen Eckbereichen jeweils mit einer Bohrung 28 für einen Lötanschluß 29 versehen, über den ein Kabel 30 mit der Solareinheit 15 in elektrischer Verbindung steht. Das Kabel 30 führt zu einem die Deckelbewegungen mitmachenden Schaltkontakt 31 einer insgesamt mit 32 bezeichneten Schaltanordnung, zu der ferner ein dachfest angeordneter Schaltkontakt 33 gehört. Der Schaltkontakt 31 weist einen Kontaktstößel 35 auf, der in einem Kunststoffgehäuse 36 quer zur Fahrzeuglängsachse und zur Verschieberichtung des Deckels 10 verschiebbar aber verdrehgesichert geführt ist. In dem Gehäuse 36 ist eine Druckfeder 37 untergebracht, die einen Stößelteil 38 von vermindertem Querschnitt umgreift und die sich mit ihrem einen Ende an einer Schulter 39 sowie an ihrem anderen Ende an einer über den Stößelteil 38 geschobenen Scheibe 40 abstützt, die ihrerseits an einer Wandung 41 des Gehäuses 36 anliegt. Die Druckfeder 37 spannt den Kontaktstößel 35 in Richtung auf den dachfesten Schaltkontakt 33, d.h. in Fig. 3 nach links, vor, wobei eine Sicherungsscheibe 42, die in eine Ringnut des Kontaktstößels 35 eingesetzt ist, durch Anlage an der Gehäusewandung 41 die Stößelverschiebebewegung begrenzt. Der Kontaktstößel 35 weist an seinem dem Schaltkontakt 33 zugewendeten Ende einen verbreiterten, abgerundeten Stößelkopf 43 auf. Das Gehäuse 36 trägt an seiner einen Seite eine vorspringende Nase 44, die in einen Ausschnitt des Aufnahmewinkels 19 eingreift (Fign. 2 und 4). Auf der gegenüberliegenden Seite weist das Gehäuse 36 eine Lasche 45 auf, die mit dem Aufnahmewinkel 19 verbunden, vorzugsweise entsprechend Fig. 4 verschraubt, ist. An dem von dem Stößelkopf 43 abliegenden Ende des Kontaktstößels 35 ist das andere Ende des Kabels 30 angebracht, zweckmäßig angenietet.

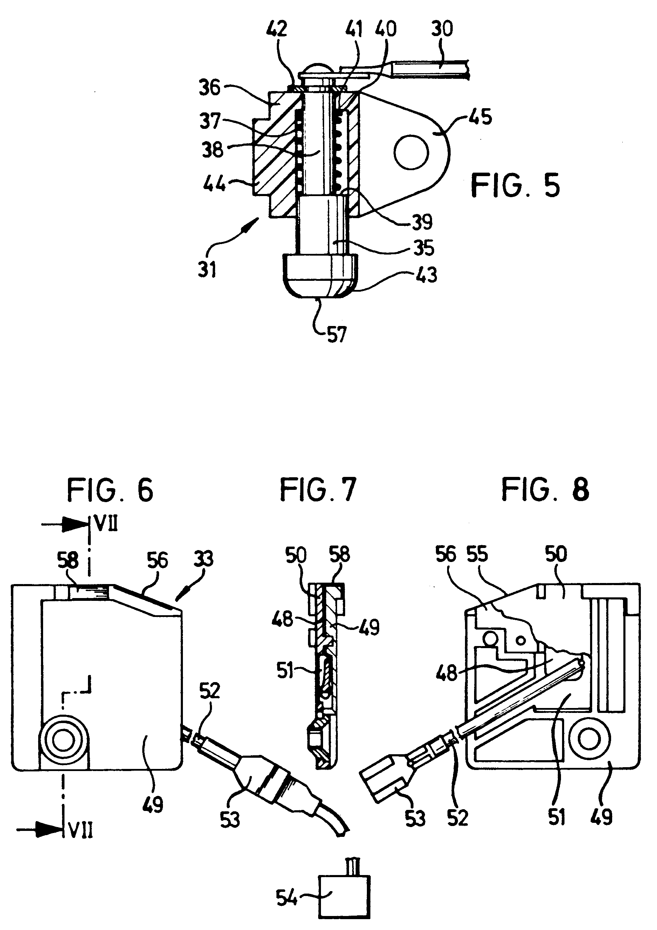

An dem Dachrahmen 25 ist ein Führungselement 47 angebracht, mit welchem der dachfeste Schaltkontakt 33 verbunden, beispielsweise verschraubt, ist. Der Schaltkontakt 33 weist einen unnachgiebigen Gegenkontakt in Form eines Kontaktbleches 48 auf, das eine dem Schaltkontakt 31 zugewendete Kante eines plattenförmigen Kontaktträgers 49 hakenartig umgreift (Fig. 7). Der Kontaktträger 49 begrenzt zusammen mit einer auf ihn aufgesetzten Abdeckplatte 50 einen Hohlraum 51. Ein Anschlußkabel 52, das an seinem einen Ende einen Flachstecker 53 trägt, reicht in den Hohlraum 51 hinein und ist dort im Bereich seines anderen Endes mit dem Kontaktblech 48 verschweißt. Über den Flachstecker 53 ist der Schaltkontakt 33 in der in Fig. 6 nur schematisch angedeuteten Weise mit einem Verbraucher 54 verbunden, bei dem es sich beispielsweise um das Bordnetz des Fahrzeuges handeln kann. Der Kontaktträger 49 ist in seinem hinteren Teil mit einer Auflaufschräge 55 versehen, die auf dem größeren Teil ihrer Länge von einer Kontaktauflage 56 abgedeckt ist, die Teil des Kontaktbleches 48 sein kann.

Der Stößelkopf 43 des Kontaktstößels 35 und das Kontaktblech 48 bilden Kontaktflächen 57 bzw. 58, die in der Schließstellung der Schaltanordnung 32 miteinander in Kontakt stehen und die beide in einer lotrechten oder nahezu lotrechten Ebene liegen.

Wenn der Deckel 10 aus der in den Fign. 1 bis 4 veranschaulichten vorderen Deckelendstellung heraus, d.h. nach hinten, verschoben ist, stehen die Schaltkontakte 31 und 33 außer Kontakt miteinander. Die Schaltanordnung 32 befindet sich im Offen-Zustand. Die Solarstromquelle (Solareinheit 15) ist von dem Verbraucher 54 elektrisch abgetrennt. Nähert sich der Deckel 10 der vorderen Deckelendstellung, trifft der mittels der Druckfeder 37 nach außen vorgespannte Kontaktstößel 35 mit seinem Kopf 43 auf die Auflaufschräge 55 des dachfesten Schaltkontaktes 33. Beim Weiterverschieben des Deckels 10 nach vorne zwingt die Auflaufschräge 55 dem Kontaktstößel 35 eine Verstellbewegung senkrecht zu der Deckelverschieberichtung und entgegen der Kraft der Druckfeder 37 auf. Dabei kommt es an der Kontaktauflage 56 und an dem Stößelkopf 43 zu einem Selbstreinigungseffekt der Kontaktmaterialien.

In der vorderen Deckelendstellung wird der Kontaktstößel 35 von der Druckfeder 37 mit seiner Kontaktfläche 57 gegen die Kontaktfläche 58 des von dem Kontaktblech 48 gebildeten unnachgiebigen Gegenkontaktes fest angepreßt. Die Schaltanordnung 32 befindet sich jetzt im Schließzustand und sorgt für eine sichere und niederohmige elektrische Verbindung zwischen der Solareinheit 15 und dem Verbraucher 54. Solange der Deckel 10 in seiner vorderen Endstellung steht, bleibt diese Verbindung aufrechterhalten, unabhängig davon, ob der Deckel in der Schließstellung steht, die Hinterkante 13 des Deckels über die feste Dachhaut 11 ausgestellt ist oder die Deckelhinterkante 13 unter die Dachhaut abgesenkt ist. Für diesen Zweck hat einerseits die Kontaktfläche 57 des Kontaktstößels 35 eine ausreichend große Flächenabmessung. Zum anderen ist die Schaltanordnung 32 so eingebaut, daß die Kontaktfläche 58 des dachfest angeordneten Schaltkontaktes 33 auf oder nahe der Deckelschwenkachse liegt, die in Fig. 4 nur beispielshalber bei 59 angedeutet ist.

Handelt es sich bei dem Verbraucher 54 um das Bordnetz, wird die Fahrzeugbatterie auch bei abgeschaltetem Motor aus der Solareinheit 15 nachgeladen, wenn der Deckel 10 seine vordere Endstellung einnimmt und dementsprechend die Schaltanordnung 32 geschlossen ist. Aus dem Bordnetz kann daher beispielsweise bei abgestelltem Fahrzeug ein Lüfter gespeist werden, der eine Überhitzung des Fahrzeuginnenraumes verhindert, ohne daß die Gefahr einer übermäßigen Entladung der Fahrzeugbatterie besteht. Stattdessen ist es aber auch möglich, mittels der Solarstromquelle einen Lüfter oder dergleichen direkt zu speisen.

Der Deckel 10 ist als lichtundurchlässiger Deckel dargestellt. An Stelle eines solchen Deckels kann auch ein lichtdurchlässiger Solardeckel verwendet werden, wie er beispielsweise in dem Aufsatz "Photovoltaic hot air purge systems" von P. Aschenbrenner, Sonderdruck aus Automotive Technology International, 1989 und in der DE-Patentanmeldung P 40 06 756 beschrieben ist. In einem solchen Fall wird der Deckelhimmel 24 so ausgeführt, daß er bei geschlossenem Deckel 10 auf Wunsch unabhängig von dem Deckel in eine die Dachöffnung 12 mehr oder weniger weit freigebende Stellung gebracht werden kann.

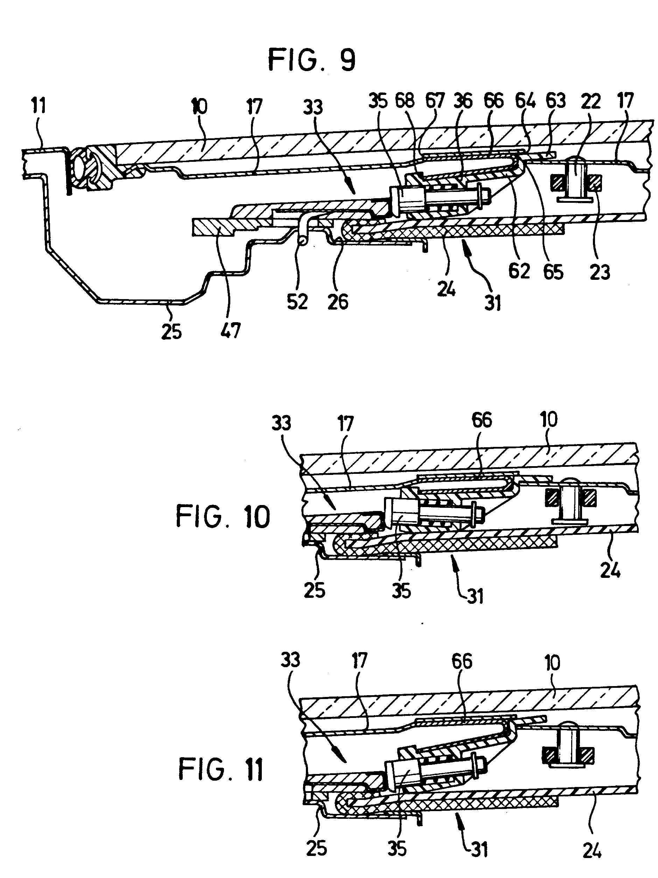

Die Ausführungsform gemäß den Fign. 9 bis 11 unterscheidet sich von der zuvor erläuterten Ausführungsform im wesentlichen nur dadurch, daß das Gehäuse 36 des Schaltkontaktes 31 mit dem Deckel 10 nicht in starrer Verbindung steht, sondern an dem Gehäuse 16 ein Schwenkarm 62 angebracht oder angeformt ist, der mit dem Deckel 10 oder einem deckelfesten Teil, im veranschaulichten Beispiel mit dem Deckelinnenblech 17, schwerkbeweglich verbunden ist. Für diesen Zweck greift der im wesentlichen S-förmig abgewinkelte Schwenkarm 62 mit seinem freien Ende 63 durch einen Schlitz 64 des Deckelinnenbleches 17, wodurch bei 65 eine waagrechte oder nahezu waagrechte Schwenkachse für den Schwenkarm 62 gebildet wird. Zwischen der Oberseite des in Fig. 9 links von der Schwenkachse 65 liegenden Teils des Schwenkarms 62 und der Unterseite des Deckelinnenbleches 17 ist eine V-förmig gebogene Blattfeder 66 eingesetzt, deren freie Enden an einer Schnittkante 67 des Deckelinnenbleches 17 bzw. einer Schulter 68 des Gehäuses 36 eingerastet sind. Die Feder 66 sucht das Gehäuse 36 zusammen mit dem Kontaktstößel 35 um die Schwenkachse 65 nach unten zu verschwenken. Dabei stützt sich das Gehäuse 36 mit seiner Unterseite an der Oberseite des Deckelhimmels 24 nahe einer Stelle ab, an welcher der Deckelhimmel 24 seinerseits auf der Längsführung 26 aufliegt.

Durch das Vorspannen des Schaltkontakts 31 in lotrechter Richtung mittels der Feder 66 mit Bezug auf den Deckel 10 wird erreicht, daß die Höhenlage des Kontaktstößels 35 und seiner Kontaktfläche 57 unabhängig von Unterschieden in der Einbauhöhe des Deckels 10 bleibt. Dies ist aus einem Vergleich der Fign. 9,10 und 11 deutlich zu erkennen, wo in Fig. 10 der Deckel 10 tiefer und in Fig. 11 der Deckel 10 höher mit Bezug auf den Dachrahmen 25 als in Fig. 9 eingestellt ist. Damit bleibt auch die Höhenlage der Kontaktfläche 57 des Schaltkontakts 31 im Vergleich zu der Höhenlage der Kontaktfläehe 58 des Schaltkontaktes 33 erhalten, wenn die Einbauhöhe des Deckels 10 gegenüber der festen Dachhaut 11 zum Ausgleich von Fertigungstoleranzen justiert wird. Desweiteren wird erreicht, daß der Deckelhimmel 24 gegen die Längsführung 26 ständig federnd angedrückt wird. Dadurch läßt sich ein Klappern des Deckelhimmels 24 während der Fahrt zuverlässig verhindern, ohne daß es dazu zusätzlicher Mittel und Maßnahmen bedarf.

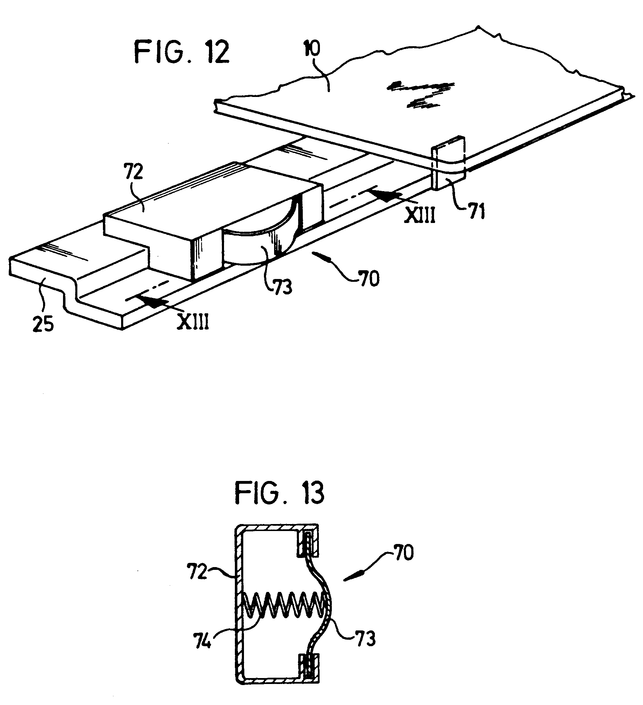

Bei der in den Fign. 12 und 13 dargestellten abgewandelten Ausführungsform ist ein federnder Schaltkontakt 70 mit dem Dachrahmen 25 oder einem anderen dachfesten Teil verbunden, während ein damit zusammenwirkender, als unnachgiebiger Gegenkontakt ausgebildeter Schaltkontakt 71 an dem Deckel 10 bzw. einem deckelfesten Teil angebracht ist. Der Schaltkontakt 70 weist ein Gehäuse 72 auf, aus dem ein gewölbtes Kontaktblech 73 vorragt. Das Kontaktblech 73 kann selbst als Kontaktfeder ausgestaltet und/oder mittels einer zusätzlichen Druckfeder 74 nach außen federnd vorgespannt sein. Wie bei der zuvor erläuterten Ausführungsform kommen die beiden Schaltkontakte 71 und 73 miteinander in Eingriff, wenn der Deckel 10 seine vordere Endstellung erreicht, und dieser Eingriff bleibt unabhängig davon aufrechterhalten, ob der in der vorderen Endstellung stehende Deckel geschlossen oder mit seiner Hinterkante über die feste Dachhaut ausgestellt bzw. unter die feste Dachhaut abgesenkt ist.

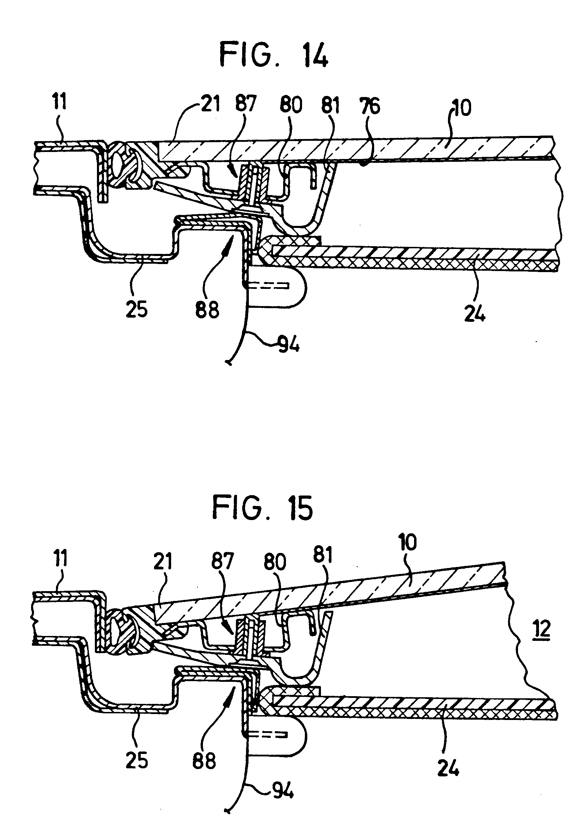

Während bei den Ausführungsformen nach den Fign. 1 bis 13 die miteinander in Kontakt kommenden Kontaktflächen der beiden zusammenwirkenden Schaltkontakte 31,33 bzw. 70, 71 in einer lotrechten oder nahezu lotrechten Ebene liegen, zeigen die Fign. 14 bis 16 eine weiter abgewandelte Ausführungsform, bei der entsprechende Kontaktflächen eine mehr oder minder waagrechte Lage einnehmen. Im Falle dieser Ausführungsform ist der Deckel 10 durchsichtig ausgebildet. Er weist für diesen Zweck eine Glasscheibe 75 auf, an deren Unterseite eine Solarzellenfolie oder -schicht 76 angeordnet ist. Nahe der Deckelvorderkante sind die Elektroden der Solarzellenfolie oder -schicht 76 mit zwei Flachsteckern verbunden, von denen in den Figuren nur der eine Stecker 77 veranschaulicht ist. Der Flachstecker 77 wird von einem Steckergehäuse 78 aufgenommen, das in einen Ausschnitt 79 eines rahmenförmigen Deckelinnenbleches 80 eingesetzt ist. Das Deckelinnenblech wird nach unten von einer Blende 81 abgedeckt. Ein mit Anschlüssen 84 versehener Kontaktstecker 85 ist von unten durch eine Öffnung 86 der Blende 81 gesteckt. Seine Anschlüsse 84 stehen dabei in elektrisch leitender Verbindung mit dem Flachstecker 77 der Solarzellenfolie oder -schicht 76.

Die Bauteile 77, 78, 84, 85 bilden einen deckelfesten Schaltkontakt 87 der, wenn der Deckel 10 seine vordere Endstellung einnimmt, mit einem dachfesten Schaltkontakt 88 zusammenwirkt. Der Schaltkontakt 88 weist ein elastisch nachgiebiges Kunststoffgehäuse 89 auf, das mit dem Dachrahmen 25 fest verbunden, z.B. auf dieses aufgesteckt, aufgenietet oder aufgeklebt ist. In das Kunststoffgehäuse 89 ist eine Blattfeder 90 eingelegt, welche einen oberen Teil 91 des Gehäuses 89 nach oben federnd vorspannt. Auf der Oberseite des Gehäuses 89 befinden sich zwei nebeneinanderliegende Kontaktflächen 92 und 93, die mit einem Verbraucher beispielsweise über eine Leiterfolie 94 elektrisch leitend verbunden sind.

Wenn der Deckel 10 sich seiner vorderen Endstellung nähert, läuft der Kopf 95 des Kontaktsteckers 85 auf die eine Kontaktfläche 93 des Schaltkontaktes 88 auf, während die Kontaktfläche 92 mit einem zweiten, nicht dargestellten Kontaktstecker in Eingriff kommt, der zu einem dem Flachstecker 77 entsprechenden zweiten Anschluß der Solarzellenfolie oder -schicht 76 führt. Auf diese Weise wird die von der Solarzellenfolie oder -schicht 76 gebildete Solarstromquelle mit dem Verbraucher leitend verbunden. Diese Verbindung bleibt aufgrund der federnden Nachgiebigkeit des Gehäuses 89 unabhängig davon erhalten, ob der in die vordere Endstellung gebrachte Deckel 10 seine Schließlage einnimmt (Fig. 14), mit seiner Hinterkante über die feste Dachhaut 11 ausgestellt ist (Fig. 15) oder zum Zurückschieben mit seiner Hinterkante unter die feste Dachhaut abgesenkt wird.

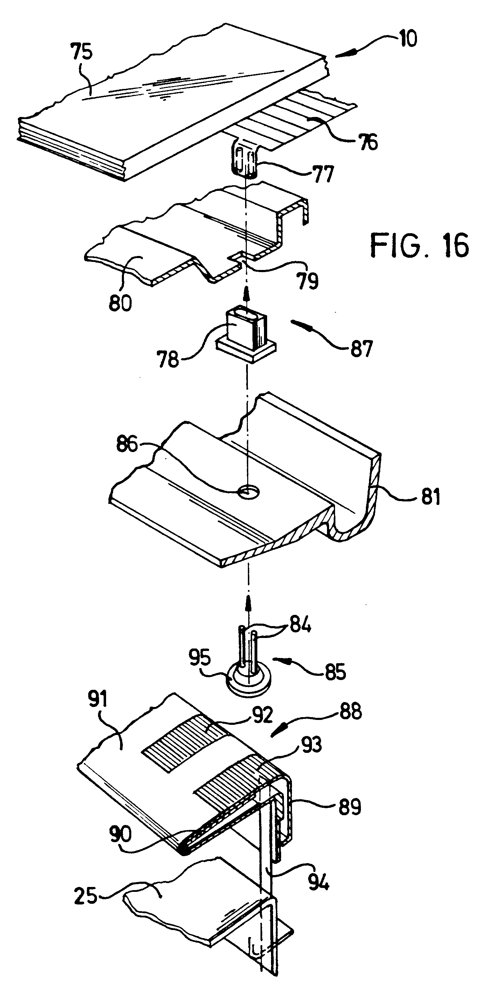

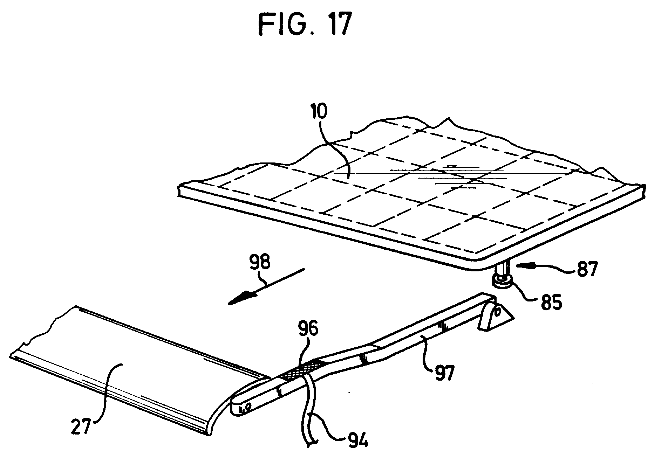

Bei der abgewandelten Ausführungsform gemäß Fig. 17 wirkt ein beispielsweise dem deckelfesten Schaltkontakt der Fign. 14 bis 16 entsprechender Schaltkontakt 87, der an dem Deckel 10 oder einem Teil der Deckelmechanik, z.B. dem Deckelinnenblech 80 und/oder der Blende 81 der Fig. 16, angebracht ist, mit einem Schaltkontakt 96 zusammen, der auf einem im übrigen herkömmlichen Ausstellarm 97 des Windabweisers 27 sitzt. Dabei ist der Schaltkontakt 87 zweckmäßig selbst federnd ausgeführt oder mit dem Deckel oder der Deckelmechanik federnd verbunden. Der Schaltkontakt 87 steht in der zuvor erläuterten Weise mit der von dem Deckel 10 getragenen Solarstromquelle in elektrischer Verbindung, während von dem Schaltkontakt 96 eine elektrisch leitende Verbindung, z.B. in Form der Leiterfolie 94, zu dem aus der Solarstromquelle zu speisenden Verbraucher führt.

Nähert sich der Deckel 10 in Richtung des Pfeils 98 der Fig. 17 seiner vorderen Endstellung, wird der Windabweiser 27 von einem auf den Ausstellarm 97 auflaufenden deckelfesten Teil aus einer Betriebsstellung in eine Außerbetriebsstellung verschwenkt, und der Schaltkontakt 87 kommt mit dem Schaltkontakt 96 in Eingriff. Der zuvor von der Solarstromquelle abgetrennte Verbraucher wird dadurch an die Solarstromquelle angeschlossen. Bei dieser Ausführungsform kann gegebenenfalls der Schaltkontakt 87 selbst auch dem Verstellen des Windabweisers 27 in Abhängigkeit von der Deckelstellung dienen.

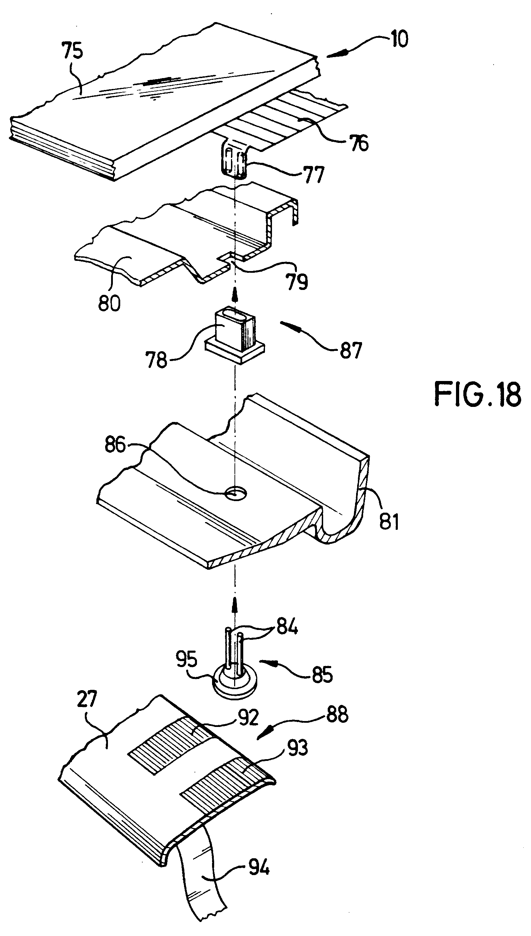

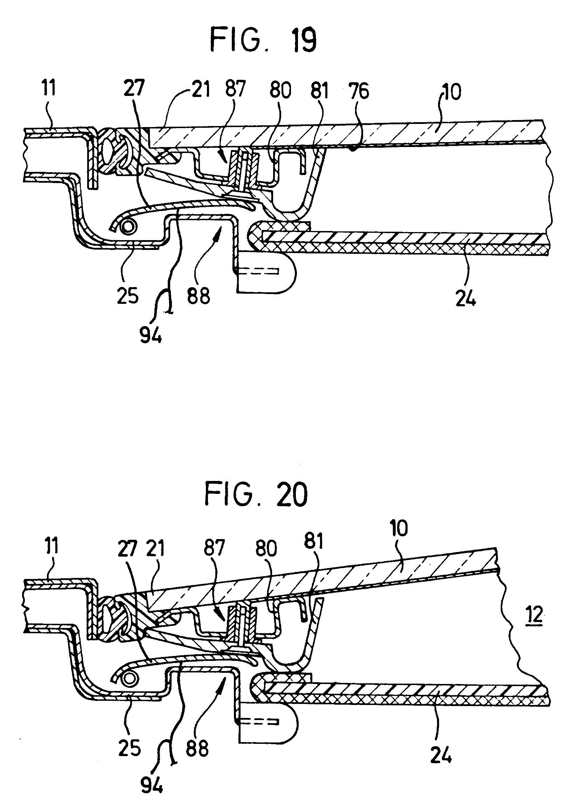

Die in den Fign. 18 bis 20 veranschaulichte Ausführungsform entspricht derjenigen nach den Fign. 14 bis 16 mit der Ausnahme, daß die Kontaktflächen 92 und 93 des Schaltkontaktes 88 auf der Oberseite des Windabweisers 27 ausgebildet sind. Es versteht sich, daß auch bei dieser Ausführungsform der Windabweiser 27 in herkömmlicher Weise, z.B. über Ausstellarme 97, in Abhängigkeit von der Stellung des Deckels 10 zwischen einer ausgestellten Arbeitsstellung und einer eingeschwenkten Außerbetriebsstellung verstellt wird, wobei die von den Schaltkontakten 87 und 88 gebildete Schaltanordnung schließt, während sich der Windabweiser 27 in der Außerbetriebsstellung befindet.

## Patentansprüche

1. Fahrzeugdach mit mindestens einem eine Solarstromquelle (15,76) tragenden Deckel (10) zum wahlweisen Verschließen oder mindestens teilweisen Freilegen einer Dachöffnung (12), mit mindestens einem aus der Solarstromquelle gespeisten Verbraucher (54), der von dem Deckel (10) getrennt, vorzugsweise fahrzeugfest, angeordnet ist, und mit einer Kontakteirrichtung zum Herstellen einer elektrischen Verbindung zwischen der Solarstromquelle und dem Verbraucher, wobei der Deckel (10) in der vorderen Deckelendstellung durch Verschwenken wahlweise in eine Schließstellung, in eine Stellung mit über die feste Dachhaut (11) ausgestellter Hinterkante (13) und/oder in eine Stellung mit unter die feste Dachhaut (11) abgesenkter Hinterkante (13) bringbar ist, **dadurch gekennzeichnet**, daß die Kontakteinrichtung als Schaltanordnung (32) ausgebildet ist und der Deckel (10) derart Teil dieser Schaltanordnung ist, daß in Abhängigkeit von der Stellung des Deckels die Schaltanordnung in der vorderen Deckelendstellung schließt und dadurch den Verbraucher (54) mit der Solarstromquelle (15,76) verbindet, daß die Schaltanordnung bei in der vorderen Deckelendstellung befindlichem Deckel (10) unabhängig davon geschlossen bleibt, ob der Deckel (10) die Schließstellung einnimmt oder mit seiner Hinterkante (13) über die feste Dachhaut (11) ausgestellt oder mit seiner Hinterkante unter die feste Dachhaut (11) abgesenkt ist, und daß die Schaltanordnung (32) den Verbraucher (54) in allen anderen Deckelstellungen von der Solarstromquelle (15,76) abtrennt.

2. Fahrzeugdach nach Anspruch 1, **dadurch gekennzeichnet**, daß die Solarstromquelle als Solareinheit (15) ausgebildet ist.

3. Fahrzeugdach nach Anspruch 1, **dadurch gekennzeichnet**, daß die Solarstromquelle als Solarzellenfolie (76) ausgebildet ist.

4. Fahrzeugdach nach Anspruch 1, **dadurch gekennzeichnet**, daß die Solarstromquelle als Solarschicht (76) ausgebildet ist.

5. Fahrzeugdach nach einem der vorhergehenden Ansprüche, dadurch gekennzeichnet, daß die Schaltanordnung (32) mindestens einen mit dem Deckel (10) oder einem deckelfesten Teil (Aufnahmewinkel 19, Deckelinnenblech 80) verbundenen Schaltkontakt (31, 71, 87) sowie mindestens einen damit in vorbestimmter Deckelstellung in Kontakt kommenden, mit einem dachfesten Teil (Führungselement 47, Dachrahmen 25) verbundenen Schaltkontakt (33, 70, 88) aufweist.

6. Fahrzeugdach nach einem der Ansprüche 1 bis 4, dadurch gekennzeichnet, daß die Schaltanordnung mindestens einen mit dem Deckel (10) oder einem deckelfesten Teil verbundenen Schaltkontakt (87) sowie mindestens einen damit in vorbestimmter Deckelstellung in Kontakt kommenden, mit einem Windabweiser (27) und/oder einem Windabweiser-Ausstellarm (97) verbundenen Schaltkontakt (88) aufweist.

7. Fahrzeugdach nach Anspruch 5 oder 6, dadurch gekennzeichnet, daß mindestens einer der beiden miteinander zusammenwirkenden Schaltkontakte (31,33; 70,71; 87,88) mit Bezug auf den anderen Kontakt federnd ausgebildet und/oder federnd gelagert ist.

8. Fahrzeugdach nach Anspruch 7, dadurch gekennzeichnet, daß der eine der beiden miteinander zusammenwirkenden Schaltkontakte (31,33) einen federnd vorgespannten Kontaktstößel (35) und der andere der beiden Schaltkontakte einen unnachgiebigen Gegenkontakt (Kontaktblech 48) aufweist.

9. Fahrzeugdach nach einem der Ansprüche 5 bis 8, dadurch gekennzeichnet, daß die miteinander in Kontakt kommenden Kontaktflächen (57,58) der beiden zusammenwirkenden Schaltkontakte (31,33; 70,71) in einer lotrechten oder nahezu lotrechten Ebene liegen. .

10. Fahrzeugdach nach einem der Ansprüche 4 bis 9, dadurch gekennzeichnet, daß die Kontaktfläche (58) des dachfest angeordneten Schaltkontaktes (33, 70) auf oder nahe der Deckelschwenkachse (59) liegt.

11. Fahrzeugdach nach einem der Ansprüche 7 bis 10, dadurch gekennzeichnet, daß der Gegenkontakt (Kontaktblech 48) auf einem Kontaktträger (49) sitzt, der mit einer Auflaufschräge (55) versehen ist, die dem Kontaktstößel (35) eine Verstellbewegung senkrecht zu der Deckelverschieberichtung aufzwingt.

12. Fahrzeugdach nach Anspruch 11, dadurch gekennzeichnet, daß die Auflaufschräge (55) eine Kontaktauflage (56) trägt.

13. Fahrzeugdach nach einem der Ansprüche 5 bis 12, dadurch gekennzeichnet, daß ein Trägerteil (Gehäuse 36, Schwenkarm 62) des mit einem deckelfesten Teil (Deckelinnenblech 17) verbundenen Schaltkontaktes (33) gegenüber dem Deckel (10) in lotrechter Richtung federnd vorgespannt ist.

14. Fahrzeugdach nach Anspruch 13, dadurch gekennzeichnet, daß das in lotrechter Richtung federnd vorgespannte Trägerteil (Gehäuse 36) an einem Deckelhimmel (24) abgestützt ist, der unterhalb des Deckels (10) entlang dachfester Führungen (Längsführung 26) verschiebbar angeordnet ist.

15. Fahrzeugdach nach Anspruch 13 oder 14, dadurch gekennzeichnet, daß das Trägerteil (Gehäuse 36, Schwenkarm 62) an dem dachfesten Teil (Deckelinnenblech 17) um eine waagrechte oder nahezu waagrechte Achse (65) schwenkbar gelagert ist.

## Claims

1. A vehicle roof having at least one cover (10) carrying a solar current source (15, 76) and intended for optionally closing or at least partially opening a roof aperture (12) with at least one consuming device (54) fed from the solar current source and which is separate from the cover (10), preferably being integral with the vehicle, and with a contact device for establishing an electrical connection between the solar current source and the consuming device, whereby the cover (10) in its extreme forward position is optionally pivotable into a closed position, into a position in which the rear edge (13) is pushed out above the fixed roof skin (11) and/or into a position in which the rear edge (13) is lowered below the fixed roof skin (11), characterised in that the contact device is constructed as a switch arrangement (32) and the cover (10) is a part of this switch arrangement in that as a function of the position of the cover so the switch arrangement closes in the extreme forward position and so connects the consuming device (54) to the solar current source (15, 76) or in that when the cover (10) is in the extreme forward position the switch arrangement remains closed regardless of whether the cover (10) is in the closed position or has its rear edge (13) pushed out beyond the fixed roof skin (11) or has its rear edge lowered below the fixed roof skin (11), and in that the switch arrangement (32) isolates the consuming device (54) from the solar current source (15, 76) in all other positions of the cover.

2. A vehicle roof according to Claim 1, characterised in that the solar current source is constructed as a solar unit (15).

3. A vehicle roof according to Claim 1, characterised in that the solar current source is constructed as a solar cell foil (76).

4. A vehicle roof according to Claim 1, characterised in that the solar current source is constructed as a solar layer (76).

5. A vehicle roof according to one of the preceding claims, characterised in that the switch arrangement (32) comprises at least one switch contact (31, 71, 87) connected to the cover (10) or to a part (mounting angle bracket 19, cover interior plate 80) which is integral with the roof and also at least one switch contact (33, 70, 88) which comes into contact therewith in a predetermined position of the cover, with a part (guide element 47, roof frame 25) integral with the roof.

6. A vehicle roof according to one of Claims 1 to 4, characterised in that the switch arrangement comprises at least one switch contact (87) connected to the cover (10) or to a part integral with the roof and at least one switch contact (88) which comes into contact therewith in a predetermined position of the cover and connected to a wind deflector (27) and/or a wind deflector push-out arm (97).

7. A vehicle roof according to Claim 5 or 6, characterised in that at least one of the two cooperating switch contacts (31, 33; 70, 71; 87, 88) is resiliently constructed and/or resiliently mounted in respect of the other contact.

8. A vehicle roof according to Claim 7, characterised in that one of the two cooperating switch contacts (31, 33) comprises a resiliently pre-tensioned contact plunger (35) while the other of the two switch contacts comprises an unyielding mating contact (contact plate 48).

9. A vehicle roof according to one of Claims 5 to 8, characterised in that the contact faces (57, 58) of the two cooperating switch contacts (31, 33; 70, 71) which come in contact with each other lie in a vertical or nearly vertical plane.

10. A vehicle roof according to one of Claims 4 to 9, characterised in that the contact surface (58) of the switch contact (33, 70) which is rigid with the roof lies on or close to the pivot axis (59) of the cover.

11. A vehicle roof according to one of Claims 7 to 10, characterised in that the mating contact (contact plate 48) is seated on a contact carrier (49) which is provided with a contact bevel (55) which compels the contact plunger (35) to perform a displacement movement at right-angles to the direction of cover displacement.

12. A vehicle roof according to Claim 11, characterised in that the contact bevel (55) has a contact surface (56).

13. A vehicle roof according to one of Claims 5 to 12, characterised in that a carrier part (housing 36, pivot arm 62) of the switch contact (33) connected to a part (cover inner plate 17) rigid with the cover is resiliently pre-tensioned in a vertical direction in relation to the cover (10).

14. A vehicle roof according to Claim 13, characterised in that the carrier part (housing 36) which is resiliently pre-tensioned in a vertical direction is supported on a headlining (24) disposed for displacement along guides (longitudinal guide 26) integral with the roof and underneath the cover (10).

15. A vehicle roof according to Claim 13 or 14, characterised in that the carrier part (housing 36, pivot arm 62) is mounted on the part (cover inner plate 17) rigid with the roof so that it can pivot about a horizontal or almost horizontal axis (65).

## Revendications

1. Toit de véhicule comportant au moins un couvercle (10) portant une source solaire de courant (15, 76), pour fermer ou libérer au moins partiellement une ouverture de toit (12), au moins une utilisation (54) alimentée par la source solaire et montée en dehors du couvercle, de préférence fixée au véhicule et équipée d'un contacteur de liaison entre la source solaire et l'utilisation, le couvercle (10), lorsqu'il est en position extrême avant pouvant être amené par basculement, au choix, en position de fermeture, en position dressée avec bord arrière (13) au-dessus de la surface du toit rigide (11), et/ou en position abaissée avec bord arrière (13) en dessous de la surface du toit rigide (11), toit caractérisé en ce que :
- le contacteur est un dispositif de commutation (32) dont le couvercle (10) fait partie dans la mesure où, en fonction de sa position, le dispositif (32) se ferme lorsque le couvercle est en position extrême avant et met donc l'utilisation (54) en liaison avec la source solaire (15, 76),
- le dispositif de commutation se trouvant fermé lorsque le couvercle (10) est en position extrême avant, le reste, indépendamment du couvercle, que celui-ci soit fermé, ou dressé avec son bord arrière (13) au-dessus du toit rigide (11) ou abaissé avec son bord arrière (13) au-dessous du toit rigide (11),
- le dispositif de commutation (32) coupe la liaison entre l'utilisation (54) et la source solaire (15, 76) dans toutes les autres positions du couvercle.

2. Toit de véhicule selon la revendication 1, caractérisé en ce que la source solaire de courant est un bloc solaire (15).

3. Toit de véhicule selon la revendication 1, caractérisé en ce que la source solaire de courant est une feuille de cellules solaires (76).

4. Toit de véhicule selon la revendication 1, caractérisé en ce que la source solaire de courant est une couche solaire (76).

5. Toit de véhicule selon l'une des revendications précédentes, caractérisé en ce que le dispositif de commutation (32) comporte un contacteur (31, 71, 87) relié au couvercle (10) ou à un élément solidaire de celui-ci (coin de réception 19, tôle intérieure 80 du couvercle) ainsi qu'au moins un contacteur (33, 70, 88) venant, dans une position donnée du couvercle, en contact avec un élément solidaire du toit (élément de guidage 47, cadre de toit 25).

6. Toit de véhicule selon l'une des revendications 1 à 4, caractérisé en ce que le dispositif de commutation comporte au moins un contacteur (87) relié au couvercle (10) ou à un élément solidaire de celui-ci, ainsi qu'au moins un contacteur (88) venant, dans une position donnée du couvercle, en contact avec un déflecteur de vent (27) et/ou un bras de dressage (97) d'un déflecteur de vent.

7. Toit de véhicule selon la revendication 5 ou 6, caractérisé en ce qu'au moins l'un des deux contacteurs (31, 33 ; 70, 71 ; 87, 88) coopérant entre eux, a un comportement élastique, ou un montage élastique par rapport à l'autre contacteur.

8. Toit de véhicule selon la revendication 7, caractérisé en ce que l'un des deux contacteurs (31, 33) coopérant entre eux comporte un poussoir de contact (35) sous tension élastique tandis que l'autre contacteur présente, en contreportée, un contact (tôle de contact 48) non flexible.

9. Toit de véhicule selon l'une des revendications 5 à 8, caractérisé en ce que les surfaces (57, 58) par lesquelles les deux contacteurs coopérant entre eux (31, 33 ; 70, 71) viennent en contact, sont disposées dans un plan perpendiculaire ou sensiblement perpendiculaire .

10. Toit de véhicule selon l'une des revendications 4 à 9, caractérisé en ce que la surface de contact (58) du contacteur (33, 70) fixé au toit se trouve sur ou près de l'axe de basculement (59) du couvercle.

11. Toit de véhicule selon l'une des revendications 7 à 10, caractérisé en ce que la contreportée (tôle de contact 48) est montée sur un support (49) présentant une pente d'engagement (55) qui oblige le poussoir de contact (35) à se déplacer perpendiculairement à la direction de coulissement du couvercle.

12. Toit de véhicule selon la revendication 11, caractérisé en ce que la pente d'engagement (55) porte une surface de contact (56).

13. Toit de véhicule selon l'une des revendications 5 à 12, caractérisé en ce qu'un support (boîtier 36, bras basculant 62) du contacteur (33) lié à un élément solidaire du couvercle (tôle intérieure 17) est sous tension élastique par rapport au couvercle (10), en direction verticale.

14. Toit de véhicule selon la revendication 13, caractérisé en ce que le support sous tension verticale (boîtier 36) est en appui sur un ciel de toit (24) situé sous le couvercle (10) et qui peut coulisser sous celui-ci le long de guides solidaires du toit (guide longitudinal 26).

15. Toit de véhicule selon la revendication 13 ou 14, caractérisé en ce que le support (boîtier 36, bras basculant 62) est monté sur l'élément solidaire du toit (tôle intérieure du couvercle 11) et peut basculer autour d'un axe (65) horizontal ou à peu près horizontal.
